# EUROPEAN PATENT SPECIFICATION

(11) **EP 3 332 629 B1**
(45) Date of publication and mention of the grant of the patent: **13.10.2021**
(21) Application number: 16832842.5
(22) Date of filing: 26.07.2016
(51) Int. Cl.: A01G 7/04

(54) **PLANT CULTIVATION METHOD**
PFLANZENZUCHTVERFAHREN
PROCÉDÉ DE CULTURE DE PLANTE

(30) Priority: 05.08.2015 JP 2015155184
(43) Date of publication of application: 13.06.2018
(73) Proprietor: Sophia School Corporation, Tokyo 102-8554 (JP)
(72) Inventor: HORIKOSHI, Satoshi, Tokyo 102-8554 (JP); SUZUKI, Nobuhiro, Tokyo 102-8554 (JP); HASEGAWA, Yasuhiko, Tokyo 102-8554 (JP)
(74) Representative: Kuhnen & Wacker Patent- und Rechtsanwaltsbüro PartG mbB
(86) International application number: PCT/JP2016/071823
(87) International publication number: WO 2017/022563

(56) References cited:
- WO-A1-2006/068649
- WO-A1-2015/093509
- WO-A1-2015/093509
- DE-A1- 3 244 428
- JP-A- 2014 045 757
- US-A- 2 712 713
- NAOKI TANI ET AL: "Microwave-assisted germination of cucumbers under low-temperature hydroponics environment", 2012 IEEE MTT-S INTERNATIONAL MICROWAVE WORKSHOP SERIES ON INNOVATIVE WIRELESS POWER TRANSMISSION: TECHNOLOGIES, SYSTEMS, AND APPLICATIONS, 1 May 2012 (2012-05-01), pages 47-50, XP055547088, DOI: 10.1109/IMWS.2012.6215817 ISBN: 978-1-4673-1779-5
- RYOSUKE YAMAMOTO: 'Effect of Long-Term Microwave Stimulation on Growth of Plant (Spinacia oleracea' TECHNICAL REPORT OF IEICE, THE INSTITUTE OF ELECTRONICS, INFORMATION AND COMMUNICATION ENGINEERS March 2012, pages 71 - 75, XP009508778

## Description

### TECHNICAL FIELD

The present invention relates to a method for cultivating a plant, wherein it is possible to facilitate the growth of the plant by radiating a microwave.

### BACKGROUND ART

In recent years, the influence, which is exerted on the ecosystem by the microwave, has been investigated and studied. For example, Non-Patent Document 1 reports that when seeds of *Spinacia oleracea* were germinated while radiating a microwave, and the microwave radiation was continued even after the germination, then the remarkable development of root was confirmed.

### PRECEDING TECHNICAL DOCUMENTS

### Non-Patent Documents:

Non-Patent Document 1: Hideya SAITO et al., "Influence exerted on growth of plant by 2.45 GHz microwave", The Institute of Electronics, Information and Communication Engineers, IEICE Technical Report, SPS2006-16 (2007-2) pp. 7-14
Non-Patent Document 2: NAOKI TANI ET AL.: "Microwaveassisted germination of cucumbers under low-temperature hydroponics environment", 2012 IEEE MTT-S INTERNATIONAL MICROWAVE WORKSHOP SERIES ON INNOVATIVE WIRELESS POWER TRANSMISSION: TECHNOLOGIES, SYSTEMS, AND APPLICATIONS, 1 May 2012 (2012-05-01), pages 47-50, XP055547088,
   DOI: 10.1109/IMWS.2012.6215817
   ISBN: 978-1-4673-1779-5
Non-Patent Document 3: RYOSUKE YAMAMOTO: "Effect of Long-Term Microwave Stimulation on Growth of Plant (Spinacia oleracea)", TECHNICAL REPORT OF IEICE, THE INSTITUTE OF ELECTRONICS, INFORMATION AND COMMUNICATION ENGINEERS, March 2012 (2012-03), pages 71-75, XP009508778

Patent document 1: WO 2015/093 509 A1

Generic methods for cultivating a plant are known from the patent document as well as from the non-patent documents 1 to 3.

### SUMMARY OF THE INVENTION

### Task to Be Solved by the Invention:

However, in Non-Patent Document 1, a net-shaped germination bed is installed in a water tank filled with distilled water and seeds are seeded thereon. The microwave is radiated onto the seeds to observe the germination rate and the degree of elongation of the root. The experiment is performed in an environment which is far from the actual plant growth environment. Further, the experiment is done only by the observation of the degree of elongation of the root during the germination. Any investigation is not performed at all about how the microwave radiation exerts the influence on the entire life of the plant.

In view of the above, the present inventors have investigated how the microwave radiation exerts the influence on the entire life of the plant, while the diligent investigations have been repeatedly made in order to find out a method which makes it possible to facilitate the growth of a plant by means of the microwave radiation in conformity with the actual plant growth environment. As a result, the present invention has been completed.

That is, an object of the present invention is to provide a method for cultivating a plant, which makes it possible to efficiently facilitate the growth of the plant by means of the microwave radiation, in conformity with the actual growth environment of the plant.

### Solution for the Task:

The above object is solved by the method according to claim 1. Advantageous embodiments of the invention are subject-matter of the dependent claims. The method for cultivating the plant according to the present invention resides in a method for cultivating a plant to facilitate growth of the plant by radiating a microwave, comprising radiating the microwave onto sprouts or a seedlings for a predetermined time at a predetermined timing provided after a seed or a bulb of a cultivation object germinates to form the sprout, the method characterized in that the microwave is radiated, while an output of the microwave is not more than 50 W and a radiation time is not more than 120 minutes.

### EFFECT OF THE INVENTION

According to the present invention, it is possible to facilitate the growth of the plant by radiating the microwave for the predetermined time onto the sprout or the seedling at the predetermined timing provided after the seed or the bulb of the cultivation object germinates to form the sprout.

### BRIEF DESCRIPTION OF THE DRAWINGS

Fig. 1 shows a graph illustrating results obtained by measuring diameters of leaves expanded or spread in a rosette form of cultivation objects three weeks after the seeding in Example 1.
Fig. 2 shows a graph illustrating results obtained by measuring diameters of leaves expanded or spread in a rosette form of cultivation objects four weeks after the seeding in Example 1.
Fig. 3 shows a graph illustrating results obtained by measuring lengths of stems (inflorescence stems) of cultivation objects five weeks after the seeding in Example 1.
Fig. 4 shows a graph illustrating results obtained by measuring lengths of stems (inflorescence stems) of cultivation objects six weeks after the seeding in Example 1.
Fig. 5 shows a graph illustrating results obtained by measuring lengths of stems (inflorescence stems) of a cultivation object on the 30th day and the 38th day after the seeding in Example 2.
Fig. 6 shows a graph illustrating results obtained by measuring the number of formed buds of cultivation objects in Example 4.
Fig. 7 shows a graph illustrating the change in the height of the stem on and after the 10th day after the seeding in Example 6.
Fig. 8 shows a graph illustrating the change of the diameter of the stem on and after the 10th day after the seeding in Example 6.

### MODE FOR CARRYING OUT THE INVENTION

An explanation will be made below about a preferred embodiment of the method for cultivating the plant according to the present invention.

In this embodiment, the microwave is radiated for a predetermined time onto a germinated sprout or a seedling at a predetermined timing provided after the germination of a seed or a bulb including, for example, discoid stem, corm, tuber, rhizome, and tuberous root as a cultivation objective to form a sprout.

In general, the plant immediately after the germination from the seed is referred to as the seedling or the plant raised from the seed, which indicates such a timing or a period that the cotyledon or the first true leaf exists. However, when the cultivation object is cultivated from the seed, the following procedure is preferred. That is, the seed of the cultivation object is seeded in accordance with an ordinary method. The microwave is radiated at the timing of the seedling or the plant raised from the seed after the seeded seeds germinate to develop the cotyledon.

For example, when the cultivation object is a dicotyledon, the microwave may be radiated after the initial true leaf (first true leaf) begins to be formed from the shoot apical meristem located at the base of the cotyledon. It is also allowable to radiate the microwave at a timing at which the second true leaf is formed.

On the other hand, when the cultivation object is a monocotyledon, the microwave may be radiated after the first true leaf begins to extend from a coleoptile. However, in many cases, as for the monocotyledon, the leaf, which initially appears on the ground surface after the seed seeded in the ground germinates, is the first true leaf. In such a situation, the microwave may be radiated after the first true leaf appears on the ground surface.

Further, when the cultivation object is cultivated from a bulb, the microwave may be radiated on the bulb, which is planted in the soil in accordance with an ordinary method, germinates and the sprout appears on the ground surface. The planting in the soil may be performed after the bulb germinates. In this case, it is preferable that the microwave is radiated before the germinated sprout becomes longer than a predetermined planting depth, and then the planting is performed in the soil in accordance with an ordinary method.

For example, the tubers and roots (potatoes), which include, for example, *Solanum tuberosum, Ipomoea batata,* and *Colocasia esculenta,* are cultivated by planting the so-called "seed tuber (seed corm) or seed potato". However, when the seed tuber (seed corm) is planted, the planting is performed in many cases after the formation of the sprout by performing the sprouting (forced sprouting). When the cultivation is performed by planting the seed tuber (seed corm), then the microwave may be radiated and the planting may be performed after performing the sprouting in accordance with an ordinary method.

Note that *Solanum tuberosum* is cultivated by using the tuber as the seed tuber, *Ipomoea batata* is cultivated by using the tuberous root as the seed tuber, and *Colocasia esculenta* is cultivated by using the corm as the seed tuber (seed corm).

In order to radiate the microwave onto the germinated sprout or the seedling, for example, when the plant is cultivated by using a seedling pot, the microwave may be radiated by introducing the plant together with the seedling pot into an apparatus provided with a processing chamber for radiating the microwave. When tubers and roots (potatoes) are cultivated by planting the seed tuber (seed corm) or seed potato, the microwave may be radiated by introducing, into the apparatus, the seed tuber (seed corm) subjected to the sprouting.

Further, when the plant is cultivated by planting the plant in the ground, the microwave may be radiated toward the radiation object from a horn antenna attached to a microwave oscillator. In this procedure, the operation for radiating the microwave may be performed manually. However, when the plant is cultivated in a wide farmland, the operation can be also performed efficiently without relying on the manpower by utilizing, for example, a wireless control helicopter (including multicopters).

When the microwave is radiated onto the germinated sprout or the seedling, it is preferable that the output and the radiation time thereof are appropriately adjusted to such an extent that the radiation object is not heated or warmed by the microwave (to such an extent that the temperature increase of the radiation object is not observed at a macroscopic level).

The method according to the present invention is limited to radiate the microwave, while the output of the microwave is not more than 50 W and more preferably not more than 30 W, and the radiation time is not more than 120 minutes and more preferably not more than 90 minutes.

If the output of the microwave radiated onto the cultivation object exceeds the foregoing range, some plant individuals wither before the flowering in the growth process to be provided thereafter.

Further, if the microwave is continuously radiated while exceeding the foregoing range, there is such a tendency that any remarkable effect is not observed.

Note that in general, the microwave refers to an electromagnetic wave having a frequency of 300 MHz to 30 GHz (wavelength: 1 m to 1 cm). However, it is preferable to use a microwave in a band of 2.45 GHz which is internationally acknowledged to be used.

The growth of the plant usually undergoes the vegetative stage in which only the vegetative organs included, for example, leaves and stems are differentiated and formed after the germination, and the growth of the plant proceeds to the reproductive stage in which the reproductive organs are differentiated and generated to form the flower bud at the shoot apex so as to advance to the flowering and the fruition. In relation thereto, in the vegetative stage, a larger number of leaves are developed to perform the photosynthesis so that the sufficient nutrient is accumulated in order to form the seeds thereby. For this purpose, the formation of the flower bud is suppressed in accordance with the action of the gene. In accordance with the growth, the suppression is weakened in order to switch the stage to the reproductive stage. Further, it is acknowledged that the activation of the gene for facilitating the formation of the flower bud also contributes to the switching to the reproductive stage.

According to this embodiment, the microwave is radiated for the predetermined period of time onto the germinated sprout or the seedling at the predetermined timing after the seed or the bulb as the cultivation object germinates to form the sprout, and thus it is possible to advance the timing at which the stage is switched from the vegetative stage to the reproductive stage. It is speculated that this results from the weakened action of the gene which intends to suppress the formation of the flower bud at the vegetative stage by radiating the microwave onto the germinated sprout or the seedling, or this results from the activation of the action of the gene which intends to facilitate the formation of the flower bud. Otherwise, it is speculated that this results from the both.

Therefore, the method is especially preferable for the cultivation of the plant for which it is demanded that the timing of the switching from the vegetative stage to the reproductive stage is advanced to cause the flowering and the fruition early so that the harvest timing is advanced thereby, for example, the ornamental plant for the flower arrangement and the cut flower as well as the plant to produce the bulb and the fruit for food.

Further, the following situations have been observed. That is, in an environment which is arranged to be preferable for the growth of the plant, any conspicuous difference is not observed in the growth in the vegetative stage between those in which the microwave is radiated onto the germinated sprout or the seedling and those in which the microwave is not radiated. However, in an environment which is disadvantageous for the growth of the plant, the growth is improved in the vegetative stage in the case of those in which the microwave is radiated onto the germinated sprout or the seedling.

For example, in recent years, the attention is focused on the plant factory in which the plant is cultivated in such an institution that the internal environment is artificially controlled so that no influence is exerted by the change of the weather, and the internal environment is insulated from the outside so that neither pathogenic organism nor harmful insect causes any invasion. In the plant factory as described above, in many cases, leaf vegetables such as *Lactuca sativa* or the like are produced by means of the hydroponics. The following observation result has been obtained by an experiment performed by the present inventors, wherein those in which the microwave is radiated onto the germinated sprout or the seedling are compared with those in which the microwave is not radiated by cultivating them with water in an amount smaller than an appropriate amount when the cultivation is performed by means of the hydroponics. That is, the growth condition in the vegetative stage is relatively improved for those in which the microwave is radiated onto the germinated sprout or the seedling, and the growth of the leaf is facilitated as compared with those in which the microwave is not radiated.

According to the fact as described above, it is also possible to expect that the time and labor, which are required to manage water, can be reduced by applying this embodiment when leaf vegetables such as *Lactuca sativa* or the like are cultivated by means of the hydroponics.

Further, the following observation results have been also obtained. That is, even when the watering is stopped after the microwave radiation, the growth condition is maintained relatively satisfactorily as compared with those cultivated under the same condition except that the microwave is not radiated. Even when the leaf size is compared, those irradiated with the microwave greatly grow. Further, the following observation results have been also obtained. That is, even in the case of being exposed to a high temperature environment (for example, about 40°C) in a state of water shortage, when the watering is restarted thereafter, the flowering and the fruition are thereby caused without causing any withering at a high survival rate as compared with those in which the microwave is not radiated.

According to the fact as described above, it is also possible to expect that the cultivation can be performed with high resistance against the drying and the heat by applying this embodiment, for example, when the cultivation is performed in a natural environment including, for example, the outdoor cultivation.

### EXAMPLES

The present invention will be explained in more detail below as exemplified by specified examples.

### [Example 1]

*Arabidopsis thaliana* (Dicotyledoneae, Brassicaceae) was selected as the cultivation object, and seeds thereof were seeded in soil in accordance with an ordinary method. Note that as for *Arabidopsis thaliana,* many genes, which relate, for example, to the growth and the reproduction, are common to those of the other plants. The results of the studies concerning the genes of *Arabidopsis thaliana* are widely applied to the other plants as well. According to this fact, *Arabidopsis thaliana* was selected as the cultivation object in Example 1.

The seeded seeds were divided into five groups, and the growth conditions were observed. As a result, seed leaves appeared on the ground surface one week thereafter. Then, one week thereafter (two weeks after the seeding), the formation of second true leaves was successfully confirmed.

At this point in time, the microwave in the 2.45 GHz band was radiated at an output of 23 W for 10 minutes, 20 minutes, 30 minutes, and 60 minutes respectively onto those belonging to the second to fifth groups. The first group was not irradiated with the microwave, which was designated as a control group.

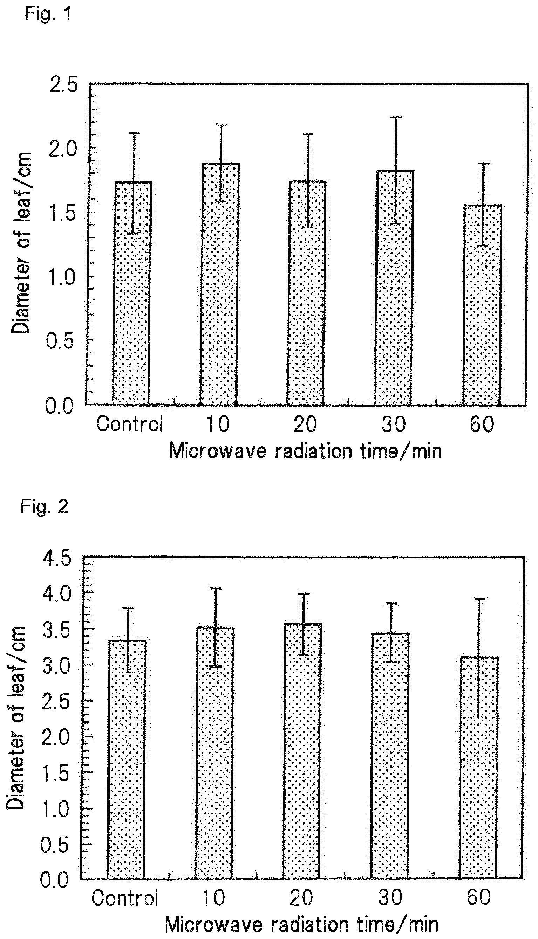

The diameters of leaves expanded or spread in a rosette form were measured three weeks and four weeks after the seeding. Obtained results are shown in Figs. 1 and 2 respectively. According to the measurement results, it has been successfully confirmed that any conspicuous change is not found in relation to the diameter of the leaves, and the microwave radiation exerts little influence on the vegetative stage of the plant.

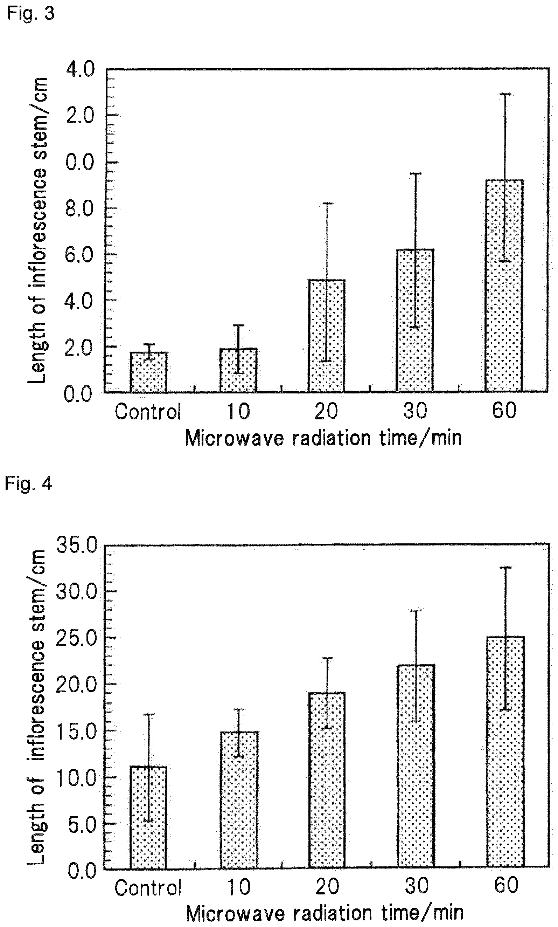

Subsequently, the lengths of the stems (inflorescence stems) were measured five weeks and six weeks after the seeding. Obtained results are shown in Figs. 3 and 4 respectively. According to these results, it has been successfully confirmed that the growth of the inflorescence stem is advanced by the microwave radiation. After that, the flower buds were formed at inflorescence stem apexes in an order starting from those in which the growth of the inflorescence stem was advanced, and the flowering and the fruition were caused. Therefore, it has been successfully confirmed that the timing, at which the stage is switched from the vegetative stage to the reproductive stage, is advanced, and the flowering and the fruition are caused early by means of the microwave radiation.

### [Example 2]

*Arabidopsis thaliana* (Dicotyledoneae, Brassicaceae) was selected as the cultivation object, and seeds thereof were seeded in soil in accordance with an ordinary method.

The seeded seeds were divided into seven groups. At a point in time at which the formation of the second true leaf was successfully confirmed two weeks after the seeding, the microwave in the 2.45 GHz band was radiated at an output of 23 W for 10 minutes, 20 minutes, 30 minutes, 1 hour, 2 hours, and 4 hours respectively onto those belonging to the second to seventh groups. The first group was not irradiated with the microwave, which was designated as a control group.

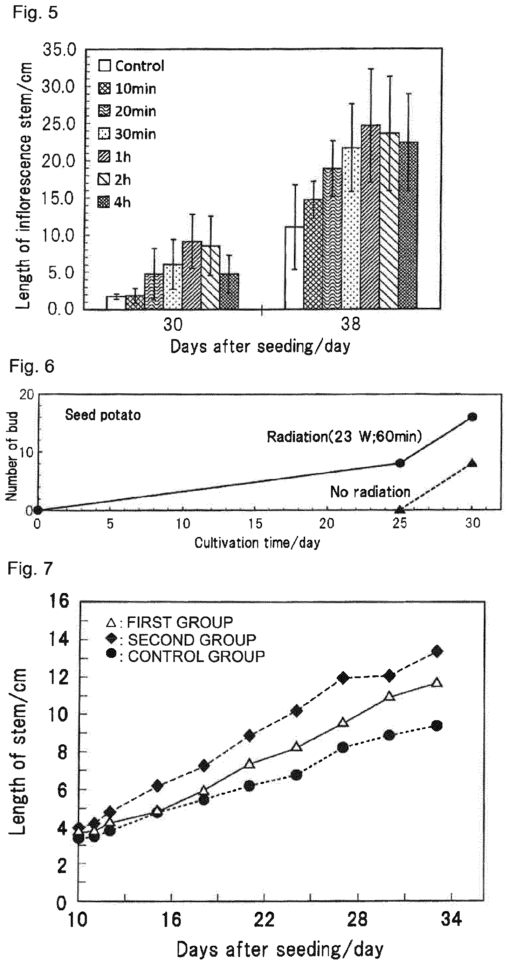

The lengths of the inflorescence stems were measured on the 30th day and the 38th day after the seeding. Obtained results are shown in Fig. 5. According to these results, the following fact has been successfully confirmed. That is, the growth of the inflorescence stem is the fastest in the plant irradiated with the microwave for 1 hour. The fast growth of the inflorescence stem next thereto is caused in the plant irradiated with the microwave for 2 hours. On the contrary, any conspicuous effect is not found even when the radiation time is prolonged to be longer than 2 hours.

### [Example 3]

*Arabidopsis thaliana* (Dicotyledoneae, Brassicaceae) was selected as the cultivation object, and seeds thereof were seeded in soil in accordance with an ordinary method.

The seeded seeds were divided into two groups. As for one group, the microwave in the 2.45 GHz band was radiated at an output of 23 W for 60 minutes at a point in time at which the formation of the second true leaf was successfully confirmed two weeks after the seeding, in the same manner as Example 1. The other group was not irradiated with the microwave, which was designated as a control group.

The watering was stopped for the both groups after the radiation of the microwave onto the one group, and the growth conditions on the 30th day after the seeding were observed. As for the group irradiated with the microwave, the growth condition was maintained relatively satisfactorily as compared with the control group. Even when the leaf size was compared, those irradiated with the microwave greatly grew.

### [Example 4]

*Arabidopsis thaliana* (Dicotyledoneae, Brassicaceae) was selected as the cultivation object, and seeds thereof were seeded in soil in accordance with an ordinary method.

The seeded seeds were classified into two groups. As for one group, the microwave in the 2.45 GHz band was radiated at an output of 23 W for 60 minutes at a point in time at which the formation of the second true leaf was successfully confirmed two weeks after the seeding, in the same manner as Example 1. The other group was not irradiated with the microwave, which was designated as a control group.

The watering was stopped for the both groups after the radiation of the microwave onto the one group. 28 days after the seeding, the plants were stationarily placed for 4 hours in a thermostatic chamber set at 40°C. The watering was restarted 2 days after the plants were taken out from the thermostatic chamber (on the 30th day after the seeding) to observe the growth . After that, the rate (survival rate), at which the plants were subjected to the flowering and the fruition without causing the withering, was about 60% in the case of the control group. On the contrary, the rate (survival rate) was about 90% in the case of the group irradiated with the microwave. A remarkable difference was found in the survival rate.

### [Example 5]

*Solanum tuberosum* (Dicotyledoneae; Solanaceae) was selected as the cultivation object. Seed tubers or seed potatoes (tubers) thereof were divided into two groups. As for one group, the microwave in the 2.45 GHz band was radiated at an output of 23 W for 60 minutes onto sprouts elongated to about 2 to 3 mm. The other group was not irradiated with the microwave, which was designated as a control group. The plants were planted in soil in accordance with an ordinary method at a planting depth of about 5 cm.

The numbers of buds were measured 25 days and 30 days after the planting of the seed tubers. Obtained results are shown in Fig. 6. According to these results, it has been successfully confirmed that the formation of the bud is facilitated by the radiation of the microwave, and the transition to reproductive stage is advanced by the microwave radiation in the case of *Solanum tuberosum* as well.

### [Example 6]

*Solanum tuberosum* (Dicotyledoneae; Solanaceae) was selected as the cultivation object, and seed tubers were subjected to the sprouting in accordance with an ordinary method. The seed tubers having been subjected to the sprouting were divided into two groups. The sizes were uniformized so that the sizes of the seed tubers of one group were about half the sizes of the seed tubers of the other group. The microwave in the 2.45 GHz band was radiated at an output of 28 W for 60 minutes onto those of the group having the small sizes of the seed tubers. The group of those having the larger sizes of the seed tubers was not irradiated with the microwave, which was designated as a control group. The plants were planted in soil in accordance with an ordinary method, and the plants were cultivated so that the growth other than the size of the seed tuber were identical.

In the case of the group irradiated with the microwave, buds appeared on the ground surface 3.5 days after the planting in average. On the other hand, in the case of the control group, buds appeared on the ground surface 6.4 days after the planting in average.

The lengths of stems were measured 19 days after the planting. As a result, the length was 48.2 cm in average in the case of the group irradiated with the microwave. On the other hand, in the case of the control group, the length was 34.5 cm in average.

Further, the diameters of stems were measured 36 days after the planting. As a result, the diameter was 8.03 mm in average in the case of the group irradiated with the microwave. On the other hand, in the case of the control group, the diameter was 5.50 mm in average.

Further, the numbers of flowers were counted 36 days after the planting. As a result, the number was 12 in the case of the group irradiated with the microwave, while the number was 5 in the case of the control group.

According to these results, it has been successfully confirmed that the growth of *Solanum tuberosum* is facilitated by the radiation of the microwave even under the disadvantageous growth condition in which the size of the seed tuber is small and the amount of nutrient is small.

### [Example 7]

*Solanum lycopersicum* (Dicotyledoneae; Solanaceae) was selected as the cultivation object, and seeds thereof were seeded in soil in accordance with an ordinary method.

The seeded seeds were classified into three groups. The microwave in the 2.45 GHz band was radiated at an output of 25 W for 60 minutes at a timing at which the first true leaf began to form in the case of the first group and at a timing at which the second true leaf began to form in the case of the second group respectively. The third group was not irradiated with the microwave, which was designated as a control group.

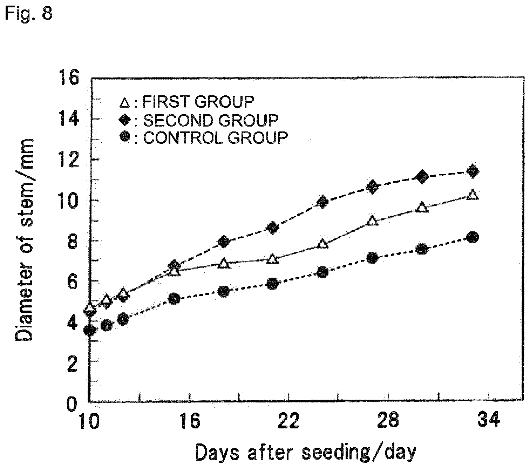

Figs. 7 and 8 show results of the observation of the growth conditions of the respective groups. Fig. 7 shows a graph illustrating the change of the height of the stem on and after the 10th day after the seeding, and Fig. 8 shows a graph illustrating the change of the diameter of the stem on and after the 10th day after the seeding.

According to these results, the following fact has been successfully confirmed. That is, the growth is most facilitated in the second group irradiated with the microwave at the timing of the formation of the second true leaf. In the second place, the growth is facilitated in the first group irradiated with the microwave at the timing of the beginning of the formation of the first true leaf.

### [Example 8]

*Lactuca sativa* (Dicotyledoneae; Asteraceae, variety: gentilina green) was selected as the cultivation object, and seeds thereof were seeded in a seedbed for hydroponics in accordance with an ordinary method.

The seeded seeds were divided into four groups. The microwave in the 2.45 GHz band was radiated at an output of 25 W for 60 minutes at a timing at which the cotyledon completely developed 3 days after the germination in the case of the first and second groups. The microwave was not radiated onto the third and fourth groups.

The plants of the first group irradiated with the microwave and the plants of the third group not irradiated with the microwave were cultivated while giving an appropriate amount of water, and the growth conditions thereof were observed from the first day to the 24th day after the seeding. As a result, any conspicuous difference was not observed in relation to the growth conditions.

On the other hand, the plants of the second group irradiated with the microwave and the plants of the fourth group not irradiated with the microwave were cultivated while giving water in an amount smaller than the appropriate amount (approximately the half of the amount of water regarded as the appropriate amount), and the growth conditions thereof were observed from the first day to the 24th day after the seeding. In the case of the second group irradiated with the microwave, the growth condition was maintained relatively satisfactorily as compared with the fourth group not irradiated with the microwave. Even when the leaf size was compared, the plants of the second group irradiated with the microwave grew greatly.

The present invention has been explained above as exemplified by the preferred embodiments. However, the present invention is not limited to the embodiments described above. It goes without saying that the present invention can be carried out in a variety of modified forms within the scope of the present invention as defined by the appended claims.

### INDUSTRIAL APPLICABILITY

The present invention can be utilized as the method for cultivating the plant to facilitate the growth of the plant.

## Claims

1. A method for cultivating a plant to facilitate growth of the plant by radiating a microwave, comprising:
radiating the microwave onto a sprout or a seedling of a cultivation object for a predetermined time at a predetermined timing provided after a seed or a bulb of the cultivation object germinates to form the sprout, the method being **characterized in that** the microwave is radiated, while an output of the microwave is not more than 50 W and a radiation time is not more than 120 minutes.

2. The method for cultivating the plant according to claim 1, wherein the microwave is radiated at a timing at which the plant is raised from the seed after the seed germinates.

3. The method for cultivating the plant according to claim 1 or 2, wherein the cultivation object is a dicotyledon, and the microwave is radiated after a first true leaf is formed.

4. The method for cultivating the plant according to claim 3, wherein the microwave is radiated at a timing at which a second true leaf is formed.

5. The method for cultivating the plant according to claim 1 or 2, wherein the cultivation object is a monocotyledon, and the microwave is radiated after a first true leaf extends from a coleoptile.

6. The method for cultivating the plant according to claim 1, wherein when the cultivation object is cultivated from a bulb, then the microwave is radiated after performing sprouting, and then planting is performed.

## Patentansprüche

1. Verfahren zum Kultivieren einer Pflanze, um das Wachstum der Pflanze durch Bestrahlung mit einer Mikrowelle zu erleichtern, aufweisend:
Bestrahlen eines Sprosses oder eines Keimlings eines Kultivierungsobjekts mit der Mikrowelle während eines vorgegebenen Zeitraums zu einem vorgegebenen Zeitpunkt, der stattfindet, nachdem ein Samen oder eine Knolle des Kultivierungsobjekts auskeimt, um den Spross zu bilden,
wobei das Verfahren **dadurch gekennzeichnet ist, dass** die Mikrowelle abgestrahlt wird, während eine Leistung der Mikrowelle nicht höher ist als 50 W und eine Bestrahlungszeit nicht mehr als 120 Minuten beträgt.

2. Verfahren zum Kultivieren der Pflanze nach Anspruch 1, wobei die Mikrowelle zu einem Zeitpunkt abgestrahlt wird, bei dem die Pflanze aus dem Samen sprießt, nachdem der Samen keimt.

3. Verfahren zum Kultivieren der Pflanze nach Anspruch 1 oder 2, wobei das Kultivierungsobjekt eine zweikeimblättrige Pflanze ist und die Mikrowelle abgestrahlt wird, nachdem ein erstes echtes Blatt gebildet wurde.

4. Verfahren zum Kultivieren der Pflanze nach Anspruch 3, wobei die Mikrowelle zu einem Zeitpunkt abgestrahlt wird, bei dem ein zweites echtes Blatt gebildet wird.

5. Verfahren zum Kultivieren der Pflanze nach Anspruch 1 oder 2, wobei das Kultivierungsobjekt eine einkeimblättrige Pflanze ist und die Mikrowelle abgestrahlt wird, nachdem ein erstes echtes Blatt aus einer Keimscheide sprießt.

6. Verfahren zum Kultivieren der Pflanze nach Anspruch 1, wobei, wenn das Kultivierungsobjekt aus einer Knolle kultiviert wird, die Mikrowelle abgestrahlt wird, nachdem das Keimen durchgeführt wurde, woraufhin die Pflanzung durchgeführt wird.

## Revendications

1. Procédé de culture d'une plante pour faciliter la croissance de la plante en rayonnant des micro-ondes, comprenant les étapes consistant à :
rayonner les micro-ondes sur une pousse ou un semis d'un objet de culture pendant une durée prédéterminée à un moment prédéterminé prévu après qu'une semence ou un bulbe de l'objet de culture ait germé pour former la pousse,
le procédé étant **caractérisé en ce que** les micro-ondes sont rayonnées, tandis qu'une sortie de la micro-onde n'est pas supérieure à 50 W et qu'un temps de rayonnement n'est pas supérieur à 120 minutes.

2. Procédé de culture de la plante selon la revendication 1, dans lequel les micro-ondes sont rayonnées à un moment où la plante est soulevée de la semence après que la semence germe.

3. Procédé de culture de la plante selon la revendication 1 ou 2, dans lequel l'objet de culture est une dicotylédone, et les micro-ondes sont rayonnées après la formation d'une première vraie feuille.

4. Procédé de culture de la plante selon la revendication 3, dans lequel les micro-ondes sont rayonnées à un moment où la deuxième vraie feuille est formée.

5. Procédé de culture de la plante selon la revendication 1 ou 2, dans lequel l'objet de culture est une monocotylédone, et les micro-ondes sont rayonnées après qu'une première vraie feuille s'étende à partir d'un coléoptile.

6. Procédé de culture de la plante selon la revendication 1, dans lequel, lorsque l'objet de culture est cultivé à partir d'un bulbe, les micro-ondes sont rayonnées après avoir effectué une germination, puis une plantation est effectuée.
